# EUROPEAN PATENT APPLICATION

(11) **EP 1 734 268 A1**
(43) Date of publication of application: **20.12.2006**
(21) Application number: 05710420.0
(22) Date of filing: 18.02.2005
(51) Int. Cl.: F16C 19/18, C10M 129/40, C10M 129/42, C10M 129/58, C10M 129/76, C10M 133/08, C10M 135/10, C10M 137/02, C10M 169/04, F16C 33/66, F16H 57/02, C10N 20/02, C10N 30/12, C10N 40/20

(54) **OBLIQUE CONTACT BALL BEARING AND BEARING DEVICE FOR SUPPORTING PINION SHAFT**

(30) Priority: 20.02.2004 JP 2004044581
(71) Applicant: JTEKT CORPORATION, Chuo-ku Osaka-shi Osaka 542-8502 (JP)
(72) Inventor: KAWAGUCHI, Toshihiro c/o JTEKT Corporation, Osaka 542-8502 (JP); OGINO, Kiyoshi c/o JTEKT Corporation, Osaka 542-8502 (JP)
(74) Representative: Steinmeister, Helmut
(86) International application number: PCT/JP2005/002588
(87) International publication number: WO 2005/080808

(57) **Abstract**

[Object] The oblique contact ball bearing is provided wherein a preload adjustment is able to be carried out in a wide range of adjustment so as to easily impart a preload.

[Means for settlement] In order that the oil-less state is easily generated when a predetermined press-contact force (thrust load) is imparted to the balls and the railway and at the same time the oil is remained as much amount as necessary for rust prevention, the oil having a kinematic viscosity in the range of 1-30 mm2/s at 20°C is used and a preload is set in the state where the rotation torque of the bearing is made large.

## Description

### FIELD OF THE INVENTION

The present invention relates to an oblique contact ball bearing and a bearing device for supporting a pinion shaft wherein the pinion shaft is supported in a case of a differential device equipped with a vehicle.

### BACKGROUND TECHNOLOGY

There is a bearing device available for supporting a pinion shaft in which a tapered roller bearing is used as a roller bearing for supporting the pinion shaft (see the Patent Document 1). The tapered roller bearing for supporting the pinion shaft is advantageous in its large load capacity, however, a rotation torque thereof (rotation resistance with respect to rotation of the pinion shaft) is increased because an area where inner and outer rings contact the tapered rollers is large, and a sliding action occurs in a flange part. There is an oblique contact ball bearing (angular ball bearing) as a bearing usable for supporting the pinion shaft and capable of reducing the rotation torque. The oblique contact ball bearing can reduce the rotation torque since its inner and outer rings contact the balls in a small area.
Patent Document 1: No. 2003-156128 of the Japanese Patent Application Laid-Open

### DISCLOSURE OF THE INVENTION

### PROBLEM TO BE SOLVED BY THE INVENTION

The oblique contact ball bearing has a feature that a preload is adjusted and set based on the rotation torque, while a range where the rotation torque is set is narrow in comparison to a range where the preload is adjusted. Due to the characteristic, in the case where the oblique contact ball bearing is used for supporting the pinion shaft, it may not be easy to attain a high accuracy in controlling the preload.

A main object of the present invention is to secure a sufficient range of the rotation torque of the oblique contact ball bearing in the case of adopting the oblique contact ball bearing for supporting the pinion shaft so that the preload with respect to the oblique contact ball bearing can be easily set, adjusted and controlled with a high accuracy.

### MEANS FOR SOLVING THE PROBLEM

An oblique contact ball bearing according to the present invention is an oblique contact ball bearing for supporting a shaft body so as to freely rotate relative to a case, wherein oil having a kinematic viscosity in the range of 1 - 30 mm²/s at 20°C is applied to a part where raceways of inner and outer rings contact the balls in the oblique contact ball bearing.

A bearing device for supporting a pinion shaft according to the present invention comprises an oblique contact ball bearing for supporting the pinion shaft in a case of a differential device, wherein a preload of the ball bearing is set, adjusted and controlled based on a rotation torque, wherein the oil having the kinematic viscosity in the range of 1-30 mm²/s at 20°C is accreted to the a part where the raceways of the inner and outer rings contact the balls in the oblique contact ball bearing.

In coordinates wherein a horizontal axis represents a preload S and a vertical axis represents a rotation torque T, a relationship between the preload and the rotation torque can be generally set to such a relational expression as T = k-S. In that case, a gradient k relates to a range where the preload is set, adjusted and controlled, and an adjustment range of the rotation torque is increased as the gradient k is larger. As a result, the preload can be set, adjusted and controlled with a high accuracy based on the rotation torque.

In the present invention, in terms of the foregoing relationship between the rotation torque and the preload, the oil having the before-mentioned kinematic viscosity is intentionally applied to the inner part of the bearing so that the gradient k in the foregoing relational expression (T = k-S) is increased in comparison to that of the conventional technology. As a result, the adjustment range of the rotation torque is increased with respect to the range where the same preload is set, adjusted and controlled, and the preload can be thereby accurately set, adjusted and controlled based on the rotation torque.

The reason is described below why the favorable preload can be obtained in the case of selecting the oil having the foregoing kinematic viscosity. The oil having the foregoing kinematic viscosity is relatively superior in its fluidity and tends to easily run down from the accreted part such as the raceway. In the case of accreting the oil having a feature like this to the oblique contact ball bearing, the following outcome can be obtained. When the ball as a rolling body is pressed onto the raceway in order to impart a specified preload to the bearing, a force generated from the pressure-contact of the ball with respect to the raceway (pressure-contact force) pushes the oil away from the contact part between the ball and the raceway, as a result of which an oil is run out at the contact part, and the metal (ball) and the metal (raceway) are substantially directly in contact with each other (metal contact state). The oil-less state can be thus relatively easily generated when the preload (thrust load) of a certain degree is imparted to a part between the ball and the raceway. The rust preventive oil is often accreted to the inner and outer rings and the entire ball.

Because the preload corresponds to the measurement result of the rotation torque, the preload can be, for example, more easily adjusted by adjusting the rotation torque. In terms of the foregoing fact, the oil having the foregoing kinematic viscosity is used so that the oil-less state intentionally generated between the ball and the raceway in the present invention.

In the oblique contact ball bearing according to the present invention, the ball and the raceway are in the metal contact state when the rotation torque (activation torque) is measured, which easily generates the oil-less state between them. As a result, the measured value of the rotation torque is increased in comparison to the conventional case where there is an ordinary amount of oil between the ball and the raceway.

Provided that the adjustment range of the rotation torque T of the conventional oblique contact ball bearing in a state where a thrust load "S2" is imparted is "T1", and the adjustment range of the rotation torque T of the oblique contactball bearing according to the present invention in a state where the same load "S2" is imparted is "T2", T2> T1 is obtained. Therefore, when the same thrust load "S2" is imparted, the oblique contact ball bearing according to the present invention is capable of adjusting the preload in a wider adjustment range of the rotation torque than the conventional oblique contact ball bearing. As is clear from the foregoing description, the preload can be easily and accurately imparted in the oblique contact ball bearing according to the present invention.

A case is thought where the thrust load "S2" in order to impart a target preload is adjusted in the range from "S1" through "S3" in terms of tolerance. In this case, when the adjustment range of the rotation torque T of the conventional oblique contact ball bearing is "T3", and the adjustment range of the rotation torque T of the oblique contact ball bearing according to the present invention is "T4", T4 > T3 is obtained. Thus, the oblique contact ball bearing according to the present invention can achieve a wider adjustment range than the conventional oblique contact ball bearing even when the same preload is desirably obtained. The wider range can improve the accuracy and facility in imparting the preload.

In order to relatively easily generate the oil-less state when the pressure-contact force of a certain degree (thrust load) is imparted to the ball and raceway, oil preferably has a kinematic viscosity in the range of 5 - 27 mm²/s at 20°C, and more preferably has a kinematic viscosity in the range of 5 - 12 mm²/s at 20°C.

### EFFECT OF THE INVENTION

According to the oblique contact ball bearing according of the present invention, in the case where the rotation torque for the confirmation of the preload is increased so that the same thrust load is desirably obtained, the preload can be adjusted in the adjustment range wider than that of the conventional oblique contact ball bearing. As a result, the preload can be accurately and easily imparted.

### BRIEF DESCRIPTION OF THE DRAWINGS

Fig. 1 is a sectional view illustrating a schematic constitution of a differential device according to a preferred embodiment of the present invention.
Fig. 2 is an enlarged sectional view of a double row ball bearing part of the differential device.
Fig. 3 is a sectional view showing a state where the double row ball bearing is being built up.
Fig. 4 is a graph showing a relationship between a thrust load and a rotation torque.

### DESCRIPTION OF REFERENCE SYMBOLS

- 1: differential device
- 2: differential case
- 6: pinion gear
- 7: pinion shaft
- 10: first double row ball bearing
- 25: second double row ball bearing
- 11: first outer ring
- 21: first assembly component
- 13: first inner ring
- 12: second outer ring
- 22: second assembly component
- 14: second inner ring
- 28,29: row of balls
- 30,31: balls

### DESCRIPTION OF THE PREFERRED EMBODIMENTS

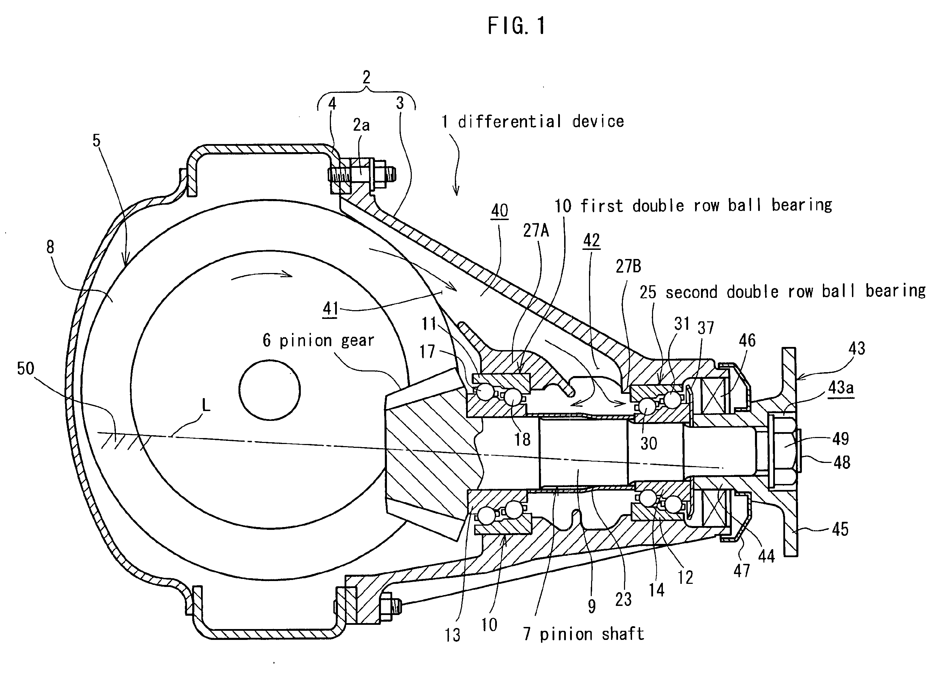

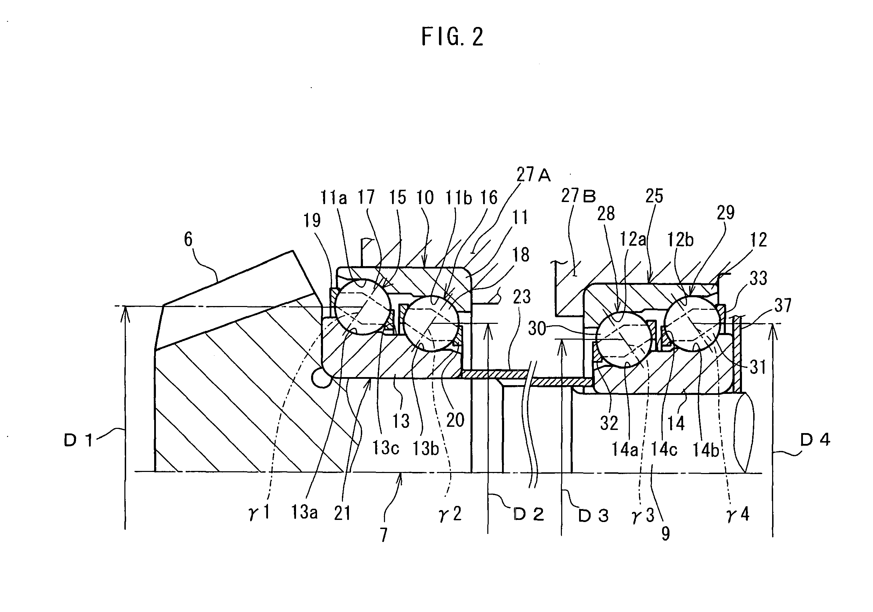

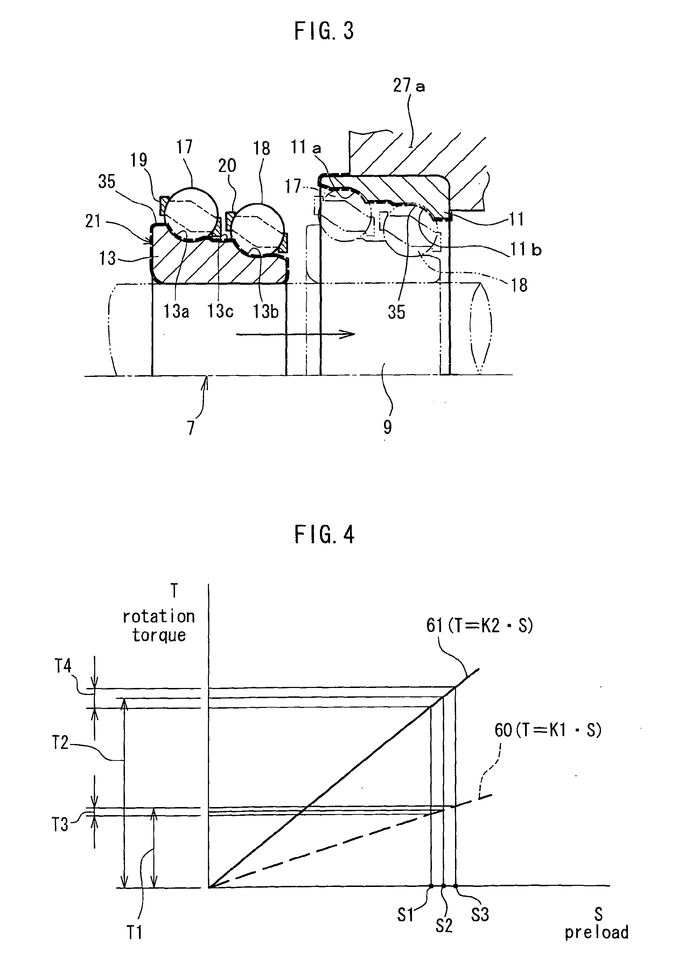

Hereinafter, preferred embodiments of a bearing device for supporting a pinion shaft according to the present invention are described referring to the drawing. Fig. 1 is a sectional view illustrating a schematic constitution of a differential device. Fig. 2 is an enlarged sectional view of a double row ball bearing part. Fig. 3 is a sectional view showing a state where an oblique contact double row ball bearing is being built up.

As shown in Fig. 1, a differential device 1 comprises a differential case 2. The differential case 2 comprises a front case 3 and a rear case 4. The cases 3 and 4 are coupled with a bolt/nut 2a and thereby integrated. In the front case 3, annular walls 27A and 27B for mounting the ball bearing are formed.

The differential case 2 comprises internally a differential speed-change mechanism 5 for differentially gearing right and left wheels, and a pinion shaft (drive pinion) 7 having a pinion gear 6 on one side thereof. The pinion gear 6 is meshed with a ring gear 8 of the differential speed-change mechanism 5. A shaft part 9 of the pinion shaft 7 is formed in a stepwise shape so that a diameter is reduced gradually from one side to the other side.

The one side of the shaft part 9 of the pinion shaft 7 is supported with respect to the annular wall 27A of the front case 3 so as to freely rotate around an axial center via a first double row ball bearing 10. The other side of the shaft part 9 of the pinion shaft 7 is supported with respect to the annular wall 27B of the front case 3 so as to freely rotate around the axial center via a second double row ball bearing 25.

As shown in Fig. 2, the first double row ball bearing 10 is an oblique contact double row ball bearing, and comprises a single first outer ring 11 fitted to an inner peripheral surface of the annular wall 27A and a first assembly component 21. The first assembly component 21 is incorporated into the first outer ring 11 from the pinion-gear side toward the opposite side of the pinion gear 6 (hereinafter, referred to as counter-pinion-gear side) along the axial-center direction, which constitutes the first double row ball bearing 10.

The first outer ring 11 has a structure of a counterbored outer ring. More specifically, the first outer ring 11 comprises a large diameter outer ring raceway 11a on the pinion-gear side and a small diameter outer ring raceway 11b on the counter-pinion-gear side, and a planar part 11c is formed between the large diameter outer ring raceway 11a and the small diameter outer ring raceway 11b. The planar part 11c has a diameter larger than that of the small diameter outer ring raceway 11b and continuous to the large diameter outer ring raceway 11a. An inner peripheral surface of the first outer ring 11 is thus formed in the stepwise shape.

The first assembly component 21 comprises a single first inner ring 13, a large-diameter-side row of balls 15, a small-diameter-side row of balls 16, and retainers 19 and 20. The first inner ring 13 has a structure of a counterbored inner ring. More specifically, the first inner ring 13 comprises a large diameter inner ring raceway 13a and a small diameter inner ring raceway 13b. The large diameter inner ring raceway 13a is opposed in a radial direction to the large diameter outer ring raceway 11a. The small diameter inner ring raceway 13b is opposed in a radial direction to the small diameter outer ring raceway 11b . A planar part 13c is formed between the large diameter inner ring raceway 13a and the small diameter inner ring raceway 13b. The planar part 13c has a diameter larger than that of the small diameter inner ring raceway 13b and continuous to the large diameter inner ring raceway 13a. An outer peripheral surface of the first inner ring 13 is thus formed in the stepwise shape.

The large-diameter-side row of balls 15 are fit to place on the pinion-gear side, in other words, between the large diameter outer ring raceway 11a and the large diameter inner ring raceway 13a. The small-diameter-side row of balls 16 are fit to place on the counter-pinion-gear side, in other words, between the small diameter outer ring raceway 11b and the small diameter inner ring raceway 13b. In the first double row ball bearing 10, a contact angle of the row of balls 15 and a contact angle of the row of balls 16 have a same direction. In other words, a line of action γ1 in accordance with the contact angle of the row of balls 15 and a line of action γ2 in accordance with the contact angle of the row of balls 16 face each other in a such a direction that an angle θ1 (not shown) made by the lines of action γ1 and *γ*2 is 0° or an acute angle (0° ≦ θ1 < 90°). Such a constitution is adopted so that a preload is imparted to the both rows of balls 15 and 16 in a same direction (in the present case, direction from the pinion-gear side toward the counter-pinion-gear side). Further, the lines of action γ1 and γ2 are tilted in such a direction that outer-diameter sides thereof are on the counter-pinion-gear side and inner-diameter sides thereof are on the pinion-gear side with respect to a thrust surface. To be brief, the lines of action γ1 and γ2 are tilted in the upper-right direction in Fig. 2. The retainers 19 and 20 retain balls 17 and 18 respectively constituting the rows of balls 15 and 16 at circumferentially equal intervals.

The pinion shaft 17 is inserted through the first inner ring 13, and an end surface of the first inner ring 13 abuts an end surface of the pinion gear 6 from the axial-center direction. The first inner ring 13 is sandwiched between the end surface of the pinion gear 6 and a plastic spacer 23 for setting the preload externally mounted on the shaft part 9 of the pinion shaft 7 at an intermediate position thereof from the axial-center direction.

In the first double row ball bearing 10, a diameter of the ball 17 in the large-diameter-side row of balls 15 and a diameter of the ball 18 in the small-diameter-side row of balls 16 are equal to each other, while pitch circle diameters D1 and D2 of the respective rows of balls 15 and 16 are different to each other. More specifically, the pitch circle diameter D1 of the large-diameter-side row of balls 15 is set to a value larger than that of the pitch circle diameter D2 of the small-diameter-side row of balls 16. As described, the first double row ball bearing 10 has a double row structure (rows of balls 15 and 16) in which the two rows of balls have the pitch circle diameters D1 and D2 different to each other.

The second double rowball bearing 25 is an oblique contact double row ball bearing, and comprises a single second outer ring 12 fitted to an inner peripheral surface of the annular wall 27B and a second assembly component 22. The second assembly component 22 is built up into the second outer ring 12 from the counter-pinion-gear side toward the pinion-gear side along the axial-center direction.

The second outer ring 12 has a structure of a counterbored outer ring. More specifically, the second outer ring 12 comprises a small diameter outer ring raceway 12a on the pinion-gear side and a large diameter outer ring raceway 12b on the counter-pinion-gear side, and a planar part 12c is formed between the small diameter outer ring raceway 12a and the large diameter outer ring raceway 12b. The planar part 12c has a diameter larger than that of the small diameter outer ring raceway 12b and continuous to the large diameter outer ring raceway 12a. Accordingly, an inner peripheral surface of the second outer ring 12 is thus formed in the stepwise shape.

The second assembly component 22 comprises a single second inner ring 14, a small-diameter-side row of balls 28, a large-diameter-side row of balls 29, and retainers 32 and 33. The second inner ring 14 has a structure of a counterbored inner ring. More specifically, the second inner ring 14 comprises a small diameter outer ring raceway 12a and a large diameter inner ring raceway 14b. The small diameter inner ring raceway 14a is opposed in a radial direction to the small diameter outer ring raceway 12a. The large diameter inner ring raceway 14b is opposed in a radial direction to the large diameter outer ring raceway 12b. A planar part 14c is formed between the small diameter inner ring raceway 14a and the large diameter inner ring raceway 14b. The planar part 14c has a diameter smaller than that of the large diameter inner ring raceway 14b and continuous to the small diameter inner ring raceway 14a. Accordingly, an outer peripheral surface of the first inner ring 14 is thus formed in the stepwise shape.

The pinion shaft 7 is inserted through the second inner ring 14. The second inner ring 14 is sandwiched between the plastic spacer 23 for setting the preload and a closure plate 37 from the axial-center direction.

The small-diameter-side row of balls 28 is fit to place on the pinion-gear side, that is, between the small diameter outer ring raceway 12a and the small diameter inner ring raceway 14a. The large-diameter-side row of balls 29 is fit to place on the counter-pinion-gear side, that is, between the large diameter outer ring raceway 12b and the large diameter inner ring raceway 14b. In the second double row ball bearing 25, a contact angle of the row of balls 28 and a contact angle of the row of balls 29 face a same direction each other. In other words, a line of action γ3 in accordance with the contact angle of the row of balls 28 and a line of action γ4 in accordance with the contact angle of the row of balls 29 face each other in such a direction that an angle θ2 (not shown) made by the lines of action *γ*3 and γ4 is 0° or an acute angle (0° ≦ θ2 <90°). Such a constitution is adopted so that the preload is imparted to the both rows of balls 28 and 29 in a same direction (in the present case, direction from the counter-pinion-gear side toward the pinion-gear side). Further, the lines of action γ3 and γ4 are tilted in such a direction that outer-diameter sides thereof are on the pinion-gear side and inner-diameter sides thereof are on the counter-pinion-gear side with respect to the thrust surface. To be brief, the lines of action γ 3 and γ4 are tilted in the upper-right direction in Fig. 2. The retainers 32 and 33 retain balls 30 and 31 respectively so as to constitute the rows of balls 28 and 29 at circumferentially equal intervals.

Thus, the inner-diameter sides of the lines of action γ1 and γ2 of the first double row ball bearing 10 are on the pinion-gear side with respect to the thrust surface, while the outer-diameter sides of the lines of action γ3 and γ4 of the second double row ball bearing 25 are on the pinion-gear side with respect to the thrust surface. Accordingly, the gradients of the lines of action in accordance with the contact angles of the bearings 10 and 25 are thereby reverse to each other. Such a constitution is adopted in order to reverse the directions where the preload is imparted in the bearings 10 and 25.

In the second double row ball bearing 25, a diameter of the ball 30 in the small-diameter-side row of balls 28 and a diameter of the ball 31 in the large-diameter-side row of balls 29 are equal to each other, while pitch circle diameters D3 and D4 of the respective rows of balls 28 and 29 are different to each other. More specifically, the pitch circle diameter D3 of the large-diameter-side row of balls 28 is set to a value smaller than that of the pitch circle diameter D4 of the small-diameter-side row of balls 29. As described, the second double row ball bearing 25 has a double row structure (rows of balls 28 and 29) in which the two rows of balls respectively have the pitch circle diameters D3 and D4 different to each other.

An oil-circulating path 40 is formed between an outer wall of the front case 3 and one side of the annular wall 27A. An oil inlet 41 of the oil-circulating path 40 is opened toward a ring-gear-8 side of the oil-circulating path 40, while an oil outlet 42 of the oil-circulating path 40 is opened toward between the annular walls 27A and 27B.

The differential device 1 comprises a companion flange 43. The companion flange 43 comprises a barrel part 44 and a flange part 45 integrally formed to the barrel part 44.

The barrel part 44 is externally mounted on the other side of the shaft part 9 of the pinion shaft 7, that is, on a drive-shaft side (not shown). The closure plate 37 is interposed between an end surface of the barrel part 44 and an end surface of the second inner ring 14 of the second double row ball bearing 25.

An oil seal 46 is provided between an outer peripheral surface of the barrel part 44 and an inner peripheral surface of an opening of the front case 3 on the other side thereof. A seal protective cap 47 is attached to the opening part of the other side of the front case 3. The oil seal 46 is covered with the seal protective cap 47.

A screw part 48 is formed at an end part of the shaft part 9 on the other side thereof. The screw part 48 is protruded into a central recess part 43a of the flange part 45. A nut 49 is screwed into the screw part 48.

The nut 49 is screwed into the screw part 48 so that the first inner ring 13 of the first double row ball bearing 10 and the second inner ring 14 of the second double row ball bearing 25 are sandwiched between the end surface of the pinion gear 6 and an end surface of the companion flange 43 in the axial-center direction, and a predetermined preload is imparted to the first double row ball bearing 10 and the second double row ball bearing 25 via the closure plate 37 and the plastic spacer 23.

In the present preferred embodiment, the first double row ball bearing 10 and the second double row ball bearing 25 constitute the bearing device for supporting a pinion shaft.

In the differential device 1 thus constituted, the lubricating oil 50 is reserved in the differential case 2 at a predetermined level L in a state where the operation is halted. The lubricating oil 50 is raised upward by the rotation of the ring gear 8 under the operation, travels through the oil circulating path 40 in the front case 3, and is introduced and supplied to upper parts of the first double row ball bearing 10 and the second double row ball bearing 25. Thereby, the lubricating oil 50 circulates in the differential case 2 so as to lubricate the first double row ball bearing and the second double row ball bearing 25.

Next, a method of assembling the differential device 1 thus constituted is described. In order to assemble the differential device 1, the first double row ball bearing 10 and the second double row ball bearing 25 are assembled in advance. Before the first double row ball bearing 10 is assembled, clearances between the balls 17 of the large-diameter-side row of balls 15 and the raceways 11a and 13a and clearances between the balls 18 of the small-diameter-side row of balls 16 and the raceways 11b and 13b are adjusted. More specifically, the respective parts of the first double row ball bearing 10 are formed so that desired clearances can be obtained, and further, shapes of the respective parts are adjusted so that the desired clearances are obtained.

In assembling the second double row ball bearing 25, clearances between the balls 30 of the small-diameter-side row of balls 28 and the raceways 12a and 14a and clearances between the balls 31 of the large-diameter-side row of balls 29 and the raceways 12b and 14b are adjusted. More specifically, the respective parts of the second double row ball bearing 25 are formed so that desired clearances can be obtained, and further, shapes of the respective parts are adjusted so that the desired clearances are obtained.

Further, oil, which is a rust-preventive oil 35, is applied to the raceways, balls and any necessary region including the raceways and balls in order to prevent generation of rust when the bearings 10 and 25 are stored and transported before they are assembled into the differential device 1. The rust preventive oil 35 has a kinematic viscosity in the range of 1 - 30 mm²/s at 20°C.

After the foregoing adjustments and preparations are made, the first double row ball bearing 10 is disassembled into the first outer ring 11 and the first assembly component 21, and the second double row ball bearing 25 is disassembled into the second outer ring 12 and the second assembly component 22. Then, the first double row ball bearing 10 and the second double row ball bearing 25 are built up into the differential device 1. More specifically, the first outer ring 11 and the second outer ring 12 are respectively pressed into the annular walls 27A and 27B. More specifically, in a state where the front case 3 and the rear case 4 are still separated, the first outer ring 11 is incorporated into the front case 3 and further pressed into from the one-side opening of the front case 3 until it abuts a stepwise part formed on the annular wall 27A in the axial-center direction. Then, the second outer ring 12 is pressed into from the other-side opening of the front case 3 until it abuts a step part formed on the annular wall 28B in the axial-center direction.

The first assembly component 21 (to be specific, first inner ring 13) is inserted through the pinion shaft 7. Then, the first assembly component 21 is built up into the pinion shaft 7 so as to locate on the pinion-gear-6 side of the shaft part 9 of the pinion shaft 7.

The pinion shaft 7 into which the first assembly component 21 is built up is inserted through a one-side opening of the front case 3. At the time, the pinion shaft 7 is inserted so that the balls 18 of the small-diameter-side row of balls 16 of the first assembly component 21 are fitted into the small-diameter outer ring raceway 11b of the first outer ring 11. Further, the pinion shaft 7 is inserted so that the balls 17 of the large-diameter-side row of balls 15 are fitted into the large-diameter outer ring raceway 11a of the first outer ring 11. In order to realize the assembly process described above, the small-diameter-side row of balls 18 is provided to be closer to a rear side in the direction where the pinion shaft 7 is inserted (the counter-pinion-gear side) than the large-diameter-side row of balls 16.

Next, the plastic spacer 23 is externally fit and inserted to the shaft part 9 of the pinion shaft 7 from the other-side opening of the front case 3. Next, the second assembly component 22 (to be specific, second inner ring 14) is externally fit and inserted to the shaft part 9 of the pinion shaft 7 from the other-side opening of the front case 3. In order to realize the foregoing external mounting and inserting, the small-diameter-side row of balls 28 is provided to be closer to a rear side in the direction where the pinion shaft 7 is inserted (pinion-gear side) than the large-diameter-side row of balls 29.

Thereafter, the closure plate 37 is inserted through the shaft part 9 of the pinion shaft 7 from the other-side opening of the front case 3. Further, the oil seal 46 is mounted on the shaft part 9 of the pinion shaft 7 from the other-side opening of the front case 3. The seal protective cap 47 is mounted on the other-side opening of the front case 3. The barrel part 44 of the companion flange 43 is inserted through the seal protective cap 47 so that the end surface of the barrel part 44 abuts the closure plate 37. Then, the nut 49 is screwed into the screw part 48. Thereby, a thrust load is imparted to the first double row ball bearing 10 and the second double row ball bearing 25, and a predetermined preload is imparted thereto. The direction where the preload is imparted is as follows. The preload is imparted to the first double row ball bearing 10 along the direction from the pinion-gear side toward the counter-pinion-gear side, while the preload is imparted to the second double row ball bearing 25 along the direction from the counter-pinion-gear side toward the pinion-gear side. Thus, the preload is imparted to the first and second double row ball bearings 10 and 25 in the reverse directions.

In the first and second double row ball bearings 10 and 25 according to the present preferred embodiment, the rust preventive oil 35 having such a relatively good fluidity as the kinematic viscosity in the range of 1 - 30 mm²/s at 20°C, preferably 5 - 27 mm²/s, or more preferably 5 - 12 mm²/s is incorporated as one of the constituents. The rust preventive oil 35 having the above feature tends to easily run down from the adherent part such as the raceway.

Below is described a reason why the rust preventive oil 35 having the above feature is used. When the nut 49 is screwed into the screw part 48 and the predetermined preload is imparted to the first and second double row ball bearings 10 and 25, the balls 17 and 18 are respectively fit into the raceways 11a, 11b, 13a and 13b, while the balls 28 and 29 are respectively fit into the raceways 12a, 12b, 14a and 14b. When the rust preventive oil 35 having the kinematic viscosity in the range of 1 - 30 mm²/s at 20°C is applied to the inside of the respective bearings at the time, the rust preventive oil 35 is pushed out from the a part where the balls are fit into the raceways by a pressure-contact force between the balls and the raceways, which easily generates an oil-less state. The balls and the raceways thereby easily generate a metal contact state where metal (balls) and metal (raceways) are substantially in contact with each other.

Then, the preload of a certain degree (thrust load) is imparted to between the balls and the raceways in the oblique contact ball bearing having the above feature according to the present preferred embodiment, the oil-less state can be relatively easily generated. As a result, a measured value of a rotation torque in the oblique contact ball bearing according to the present preferred embodiment becomes larger in comparison to the conventional structure where an ordinary amount of oil is present between the balls and the raceways in the state where the preload is applied. As described, the oblique contact ball bearing according to the present preferred embodiment is capable of adjusting the preload in an adjustment range wider than that of the conventional oblique contact ball bearing.

It is not preferable for the kinematic viscosity at 20°C of the rust preventive oil 35 to exceed 30 mm²/s because the generation of the oil-less state becomes difficult, and even slight changes in the rotation and temperature make the rotation torque value variable in the case of measuring the rotation torque at a low speed, which destabilizes a range between a maximum value and a minimum value. When the kinematic viscosity at 20°C is below 1 mm²/s , the oil-less state is easily generated, while it is not favorable because it becomes difficult for the oil to be retained in the raceways. Based on the foregoing reason, the rust preventive oil 35 having the kinematic viscosity in the range of 1 - 30 mm²/s at 20°C is adopted in the oblique contact ball bearing according to the present preferred embodiment.

The rust preventive oil 35 is obtained in such a manner that lubricating oil is mixed with a rust preventive additive, however, the type of the additive is not particularly limited. General examples of the types of the rust preventive oil 35 are a rust preventive oil of solvent dilution type, a rust preventive oil of lubricating type and the like, and any of them can be used. The rust preventive additive is generally a compound consisting of a polarity group and a lipophilic group in one molecule such as carboxylate, sulfonate, ester, amine, amide, phosphate or the like, which has a strong adsorption to metal and also a favorable solubility to oil. For example, an alkyl succinic acid derivative having an alkyl group such as C12 - C18 is often used, and an amount of the additive is approximately 0.05%. Typical examples of the rust preventive additive, other than the foregoing examples, include metal soap such as calcium, zinc or lead salt of lanolin fatty acid, wax oxides or metal soap thereof, or soap of naphthenic acid, ester such as sorbitan monooleate, pentaerythritol monooleate, sulfonate or phosphate, and amine such as rosinamine, N-oleyl sarcosine.

When the rotation torque is measured in the first and second double row ball bearings 10 and 25 in the substantially oil-less state, the measured values are larger than in the case where the rust preventive oil is present because the metal and the metal are fitted into each other.

A graph of Fig. 4 shows a relationship between a thrust load S (preload) imparted to the oblique contact double row ball bearing and a rotation torque T corresponding to the thrust load S. The thrust load S imparted to the oblique contact double row ball bearing can be known through the measurement of the rotation torque T.

In the drawing, a broken line 60 (T = k1·S) shows a result of the conventional oblique contact double row ball bearing, while a solid line 61 (T = k2·S) shows a result of to the oblique contact double row ball bearings 10 and 25 according to the present invention. Comparing a gradient of the broken line 60 (k19) with that of the solid line 61 (k2) to each other, the gradient of the solid line 61 (k2) is larger than the that of the broken line 60 (k1) (k2>k1). It is shown that the double row ball bearings 10 and 25 are in the oil-less state as described ,above when the preload is applied thereto, and the rotation torque at the time is larger than that of the conventional oblique contact double row ball bearing.

Below is described a case where, for example, a S2 value is imparted as the thrust load S in order to impart the preload to the oblique contact double row ball bearing referring to Fig. 4. In the broken line 60, the adjustment range of the rotation torque T corresponding to the S2 value is T1. Correspondingly, the adjustment range of the rotation torque T is T2 in the double row ball bearings 10 and 25 according to the present invention. The gradient of the solid line 61 is larger than that of the broken line 60 (T2>T1).

In other words, when the same preload is imparted, the rotation torque T can be adjusted in the wider adjustment range in the double row ball bearings 10 and 25 according to the present invention than in the conventional double row ball bearing. As a result, the preload can be accurately and easily imparted.

Further, a case is thought where the thrust load S2 to be imparted is made to be a range from S1 through S3 in consideration of tolerance range. In this case, the adjustment range of the rotation torque T in the conventional oblique contact double row ball bearing is T3, while the adjustment range of the rotation torque T in the double row ball bearings 10 and 25 according to the present invention is T4. In this case, it is k4>k3 as shown in Fig. 4. Therefore, when the same preload is imparted, the rotation torque T can be adjusted in the wider adjustment range in the double row ball bearings 10 and 25 according to the present invention than in the conventional double row ball bearing. As a result, the thrust load (preload) can be accurately and easily imparted.

In order to relatively easily generate the oil-less state when the pressure-contact force (thrust load) of a certain degree is imparted to the balls and the raceways, the rust preventive oil 35 having the kinematic viscosity in the range of 5 - 27 mm²/s at 20°C is preferably used, and the rust preventive oil 35 having the kinematic viscosity in the range of 5 - 12 mm²/s at 20°C is more preferably used.

In the foregoing preferred embodiment, the present invention was applied to the oblique contact double row ball bearing (first double row ball bearing 10 and second double row ball bearing 25). However, the present invention is not limitedly applied to the double row bearing, and can be applied to an oblique contact ball bearing of other types such as a single row ball bearing in a similar manner. Furthermore, in the foregoing preferred embodiment, the present invention was applied to the structure in which the roller bearings constituting the bearing device for supporting the pinion shaft are both the oblique contact ball bearings. However, the present invention can be applied to a structure in which one of the roller bearings constituting the bearing device for supporting the pinion shaft is the oblique contact ball bearing in a similar manner.

## Claims

1. An oblique contact ball bearing, wherein oil having a kinematic viscosity in the range of 1 - 30 mm²/s at 20°C is applied to a part where raceways of inner and outer rings and balls are in contact with each other.

2. The oblique contact ball bearing according to Claim 1, wherein the kinematic viscosity is 5 - 27 mm²/s.

3. The oblique contact ball bearing according to Claim 1, wherein the kinematic viscosity is 5 - 12 mm²/s.

4. The oblique contact ball bearing according to Claim 1, wherein the oil is the rust preventive oil.

5. The oblique contact ball bearing according to Claim 1, wherein the balls are axially provided in double rows.

6. The oblique contact ball bearing according to Claim 5, wherein pitch circle diameters of the balls in the both rows are different to each other.

7. The oblique contact double row ball bearing according to Claim 6, wherein a contact angle of the ball in one of the rows and a contact angle of the ball in the other row have a same direction.

8. A bearing device for supporting a pinion shaft comprising:
a first roller bearing for supporting one-end side of the pinion shaft;
a second roller bearing for supporting another-end side of the pinion shaft, wherein
at least one of the roller bearings is an oblique contact double row ball bearing, and
oil having a kinematic viscosity in the range of 1 - 30 mm²/s at 20°C is applied to a part where raceways of inner and outer rings and balls are in contact with each other in the oblique contact double row ball bearing.

9. The bearing device for supporting the pinion shaft according to Claim 8, wherein the kinematic viscosity is 5 - 27 mm²/s.

10. The bearing device for supporting the pinion shaft according to Claim 8, wherein the kinematic viscosity is 5 - 12 mm²/s.

11. The bearing device for supporting the pinion shaft according to Claim 8, wherein the both bearings are the oblique contact double row ball bearings in which pitch circle diameters in an axial direction are different to each other.

12. The bearing device for supporting the pinion shaft according to Claim 8, wherein a contact angle of the ball in one of the rows and a contact angle of the ball in the other row have a same direction.
